# EUROPÄISCHE PATENTSCHRIFT

(11) **EP 1 411 307 B1**
(45) Veröffentlichungstag und Bekanntmachung des Hinweises auf die Patenterteilung: **19.04.2006**
(21) Anmeldenummer: 02023030.6
(22) Anmeldetag: 16.10.2002
(51) Int. Cl.: F24J 3/00

(54) **Heizvorrichtung**
Heating device
Appareil de chauffage

(43) Veröffentlichungstag der Anmeldung: 21.04.2004
(73) Patentinhaber: BorgWarner Inc., Auburn Hills, MI 48326-2872 (US)
(72) Erfinder: Tilly, Christian, 88690 Uhldingen-Mühlhofen (DE)
(74) Vertreter: Balsters, Robert

(56) Entgegenhaltungen:
- EP-A- 0 395 600
- EP-A- 0 784 151
- EP-A- 0 800 943
- EP-A- 0 826 530
- FR-A- 2 505 996

## Beschreibung

### Gebiet der Erfindung

Die vorliegende Erfindung bezieht sich auf eine Heizvorrichtung für ein mittels eines Förderrotors gefördertes Temperierfluid. Im Rahmen der Erfindung kann dieses Fluid jeglicher Art, im allgemeinen flüssig, gegebenenfalls aber auch gasförmig, sein. Auch das Anwendungsgebiet dieser Heizvorrichtung kann für die verschiedensten Zwecke vorgesehen sein, wie etwa für die Raumtemperierung, die Aufheizung der Kühlflüssigkeit von Verbrennungsmotoren etc.

Der Förderrotor sitzt an einer durch einen Antrieb rotierenden Welle, wobei die Heizvorrichtung Wärme durch Scherung mittels einer rotierenden Scheranordnung in einer eine viskose Flüssigkeit aufnehmenden Kammer zur Abgabe an das Temperierfluid erzeugt.

### Hintergrund der Erfindung

Mit Scherung arbeitende Heizvorrichtungen sind in den verschiedensten Ausführungen bekannt. Beispiele finden sich etwa in den U.S.-Patenten No. 5,778,843; 6,047,896 und 6,138,920. Davon veranschaulicht die letztere eine ziemlich komplizierte Steuerung einer als eigene und vom Förderantrieb für das Temperierfluid weitgehend gesonderten Heizeinheit. Die Scherung erfolgt hauptsächlich in einem konischen, glatten Scherspalt, wie er von Rührwerksmühlen für andere Zwecke an sich bekannt ist. Glatt sind auch die Flächen der Scheranordnung nach dem U.S.-Patent No. 5,778,843, die ebenfalls eine von der Fluidförderung gesonderte Einheit bildet, und ähnlich ist es mit der Konstruktion nach dem U.S.-Patent No. 6,047,896. In den beiden letzteren Fällen sind Elektromagnete für Steueraufgaben vorgesehen.

Im Gegensatz zu den oben erwähnten glatten Scherflächen sind etwa nach der DE-198 51 546 A1 oder im U.S. Patent No. 6,039,264 einzelne, einer glatten Wand gegenüberliegende Scherteile mit Vorsprüngen und Vertiefungen versehen, die im ersteren Fall als axial abstehende Vorsprünge mit dazwischenliegenden Vertiefungen, im zweiten Falle als radiale Schlitze ausgebildet sind. Auch hier sind die Heizeinrichtungen als vom Fluidumlauf im wesentlichen gesonderte Teile ausgeführt, was natürlich einen besonderen Platzaufwand bedeutet.

Zwar wurde bereits in der EP-0 826 530A2 der Zusammenbau einer Fördereinrichtung für ein Temperierfluid mit einer mit Scherung arbeitenden Heizvorrichtung vorgeschlagen. Dabei bildeten aber diese beiden Einheiten an sich gesonderte Module, die lediglich aneinandergeflanscht wurden, wobei für die Steuerung der Zirkulation des Temperierfluides von einem Modul zum anderen ebenso wie für die Zirkulation der viskosen Flüssigkeit ein nicht unbeträchtlicher Aufwand getrieben werden mußte.

### Kurzfassunq der Erfindung

Der vorliegenden Erfindung liegt die Aufgabe zugrunde, eine kompaktere Form für die Heizeinrichtung zu finden.

Ein weiterer Aspekt liegt in der Aufgabe, einen größeren Wirkungsgrad für die Heizeinrichtung zu erreichen.

Eine dritte Aufgabe liegt darin, die Steuerung zu vereinfachen, besonders aber auch auf Ventilsteuerungen möglichst zu verzichten.

All diese Ziele werden erreicht bzw. ihre Erreichung mindestens ermöglicht, indem die die viskose Flüssigkeit aufnehmende Kammer unmittelbar in einem Hohlraum des Förderrotors ausgebildet ist.

Damit wird praktisch die Heizeinrichtung in die Pumpeinheit (wie immer diese im Detail ausgebildet ist) integriert, womit sich eine größere Kompaktheit der Konstruktion ergibt. Gleichzeitig läßt sich so aber auch der Wirkungsgrad erhöhen, denn der Antrieb für die Pumpeinheit stellt auch die Energie für die Scherung bereit. Mindestens hinsichtlich der Gehäuseausbildung ergibt sich durch die Zusammenlegung der beiden Einheiten eine Vereinfachung, wobei eine komplizierte Steuerung für die Verteilung der verschiedenen Fluide entfällt.

Wenn eine Steuereinrichtung für die Relativbewegung zwischen Scherplatte und Innenflächen des Förderrotors vorgesehen ist, durch welche die Größe der relativen Bewegung steuerbar ist, dann vereinfacht sich die Steuerung gegenüber bekannten (und mit einer gewissen Trägheit behafteten) Ventilsteuerungen besonders dann, wenn die Steuereinrichtung mindestens einen Elektromagneten aufweist, dem Steuersignale aus einer Steuerstufe, vorzugsweise mit mindestens einem Temperatursensor, zuführbar sind. Denn mit einer elektrischen Steuerung erreicht man natürlich eine geringere Trägheit. Dies kann im Rahmen der Erfindung so realisiert werden, daß die Steuereinrichtung eine Kupplung für die Welle des Förderrotors aufweist, die wiederum eine schnell ansprechende elektromagnetische Kupplung sein kann.

Es wurde oben bereits erwähnt, daß die erfindungsgemäße Heizeinrichtung für alle möglichen Zwecke einsetzbar sein kann, doch ist es bevorzugt, wenn das Temperierfluid innerhalb eines Fahrzeuges zirkuliert, beispielsweise in einem Kühl- und/oder Klimatisierkreislauf, und daß der Antrieb vom Fahrzeugantrieb abgeleitet ist.

### Kurzbeschreibung der Zeichnung

Weitere Einzelheiten und Merkmale der Erfindung ergeben sich an Hand der nachfolgenden Beschreibung von in der Zeichnung schematisch dargestellten bevorzugten Ausführungsbeispielen. Es zeigen:
- Fig. 1: ein mit der erfindungsgemäßen Heizvorrichtung und den entsprechenden Zirkulationsleitungen versehenes Fahrzeug in Perspektivansicht;
- Fig. 2: ein erstes Ausführungsbeispiel einer erfindungsgemäßen Heizvorrichtung; und
- Fig. 3: ein zweites Ausführungsbeispiel einer erfindungsgemäßen Heizvorrichtung.

### Detaillierte Beschreibung der Zeichnung

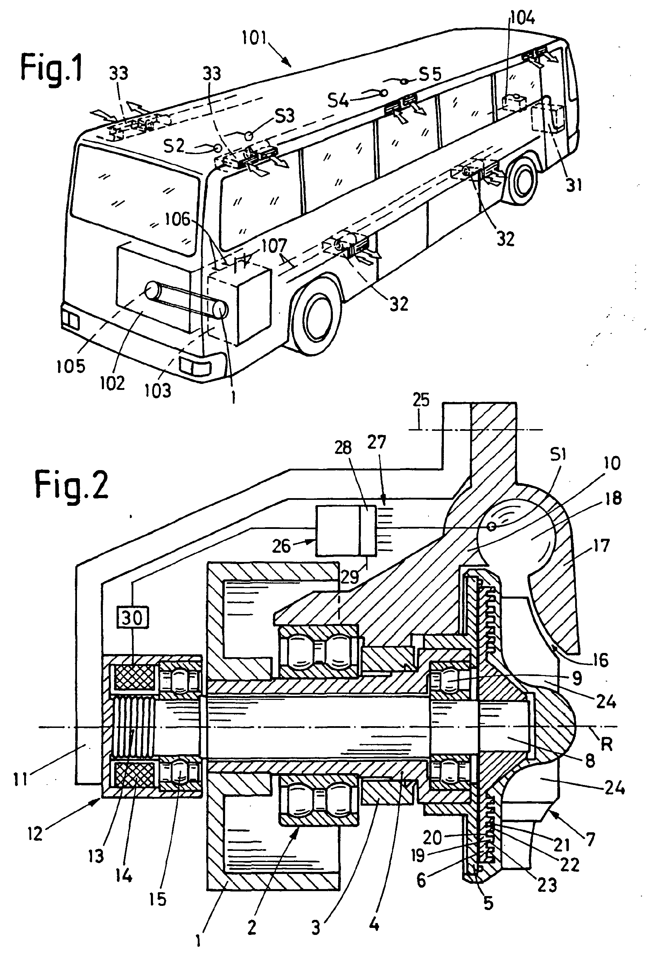

In Fig. 1 ist ein Fahrzeug 101 dargestellt, welches im Heck mit einem Antriebsmotor 102, wie einem Benzin- oder Dieselmotor, versehen ist. Der Motor 102 treibt über ein Riemenrad 105, im allgemeinen ein Keilriemenrad, gegebenenfalls aber auch ein Kettenrad, ein Antriebsrad 1 einer Temperiereinheit 103, die außer einer - an sich bekannten und deshalb hier nicht näher dargestellten Kühlvorrichtung auch eine Heizvorrichtung gemäß der vorliegenden Erfindung besitzt. Es versteht sich, daß die Erfindung nicht auf eine bestimmte Art von Fahrzeug beschränkt ist, sondern etwa auch für Personenkraftwagen, Lastkraftwagen etc. verwendet werden kann. Es wurde auch schon oben erwähnt, daß die Erfindung auch zur Beheizung stationärer Räume eingesetzt werden könnte.

Die Temperiereinrichtung 103 ist mit Anschlüssen 106 für den Kühlkreislauf des Motors 102 und Anschlüssen 107 zur Zirkulierung eines Fluids, wie Wasser, für eine Klimaregelung im Inneren des Fahrzeuges 101 versehen. Es ist also verständlich, daß die Heizvorrichtung nach der vorliegenden Erfindung für die Raumheizung (auch eines stationären Raumes) und/oder die Erwärmung des Kühlwassers, etwa beim Anstarten eines Motors 102 im Winter, einsetzbar ist. Diese Zirkulation über die Anschlüsse 107 erreicht vorteilhaft an sich bekannte Wärmetauscher 31-33.

Fig. 2 veranschaulicht den Aufbau einer erfindungsgemäßen Heizvorrichtung gemäß einem ersten bevorzugten Ausführungsbeispiel im einzelnen.

Dabei ist das bereits oben besprochene Antriebsrad 1 zu sehen, welches an einem Ende einer Hohlwelle 4 befestigt, beispielsweise auf ihr aufgekeilt, ist. Das andere Ende der Hohlwelle 4 trägt eine ebenso in an sich beliebiger Weise an ihr befestigte Antriebsscheibe 5, an der ein Flügelrad 7 (mit Flügeln 24) einer Wasserpumpe zum Fördern einer Temperierflüssigkeit, wie Wasser, dicht befestigt ist. Das Flügelrad 7 ist in einem nur teilweise dargestellten Rotorraum 16 innerhalb eines Gehäuses 17 untergebracht (nur die obere Hälfte ist dargestellt), das mit den Anschlüssen 106 und/oder 107 (Fig. 1) verbunden ist. Dabei saugt das Flügelrad 7 Temperierfluid entlang seiner Rotationsachse R ein und gibt es radial außen an einen mit den entsprechenden Anschlüssen 106 und/oder 107 verbundenen Kanal 18 ab, über den es dann weitergefördert wird. Da das Flügelrad 7 mit der Welle 4 ebenso fest verbunden ist wie diese mit dem Riemenrad 1 wird das Flügelrad 7 mit einer Drehgeschwindigkeit angetrieben, die der Drehgeschwindigkeit des Motors 102 (Fig. 1) und dem Übersetzungsverhältnis der beiden Riemenräder 105 und 1 entspricht.

Es versteht sich, daß die vorliegende Erfindung keineswegs auf die Verwendung einer Pumpe mit dem Rad 7 als Förderrotor eingeschränkt ist. Bei Verwendung eines gasförmigen Temperierfluids würde man ein entsprechendes Gebläse an Stelle des Pumpenrotors 7 vorsehen.

Um das in den Kanal 18 geförderte Temperierfluid zu erwärmen, ist im hohlen Inneren des Flügelrades 7 eine gegenüber diesem eine Relativdrehung ausführende Scherplatte 6 vorgesehen. Diese Scherplatte 6 weist vorzugsweise abwechselnd axiale Vorsprünge 19 und Vertiefungen 20 auf, die mit entsprechenden Vorsprüngen 21 und Vertiefungen 22 an den Innenflächen des Förderrotors bzw. Flügelrades 7 kämmen. Da das Flügelrad dicht auf die Antriebsscheibe 5 gesetzt ist und die Scherplatte 6 dicht an diese Antriebsscheibe 5 anschließt, ergibt sich ein schmaler Spalt 23 zwischen den ineinander verzahnten Vorsprüngen 19 und 21, in welchem eine viskose Flüssigkeit einer äußerst wirksamen Scherung unterworfen werden kann. Der Vorteil eines derartig geschlossenen Systems liegt auch noch darin, daß die viskose Flüssigkeit praktisch ständig in dem spaltartigen Zwischenraum 23 verbleiben kann und keinerlei Ventile für ihre Zufuhr erforderlich sind. Insofern bedarf die gezeigte Konstruktion auch nur eines geringen Wartungsaufwandes.

Damit sich eine Relativdrehung zwischen dem Flügelrad 7 und der Scherplatte 6 ergibt, ist eine als Welle 8 innerhalb der Hohlwelle 4 ausgebildete Halteeinrichtung vorgesehen. Es versteht sich, daß die Haltfunktion auch erfüllt würde, hätte der Teil 8 eine andere Form als die einer Welle, doch erleichtert dies die Lagerung. Tatsächlich ist für die Hohlwelle 4 ein äußeres Wälzlager 2 vorgesehen, wogegen für die wellenartige Halteeinrichtung 8 je ein Lager 9 bzw. 15 an je einem Endbereich angeordnet ist. Es ist auch ersichtlich, daß die stab- oder wellenartige Halteeinrichtung 8 zur sicheren Befestigung der verschiedenen Teile als Formdrehteil mit unterschiedlichen Durchmessern gefertigt ist. Ferner ist ein ringförmiges Dichtungselement 3 innerhalb des Gehäuses 17 (dessen in Fig. 2 unterer Teil der Deutlichkeit halber weggelassen ist) vorgesehen.

Mit Hilfe der Halteeinrichtung 8 kann die Scherplatte 6 als Statorplatte stationär gehalten werden. In diesem Falle ergibt sich die größte Scherung im Spalt 23 durch das Zusammenwirken mit den Innenflächen des Flügelrades 7. Die in diesem Spalt befindliche viskose Flüssigkeit wird also stark erhitzt, wobei damit das aus einem gut wärmeleitenden Material, wie Aluminium, bestehende Flügelrad 7 erwärmt wird und diese Wärme unmittelbar und praktisch ohne Verlust unmittelbar an das entlang der Achse R ein und über den Kanal 18 ausströmende Temperierfluid abgegeben wird.

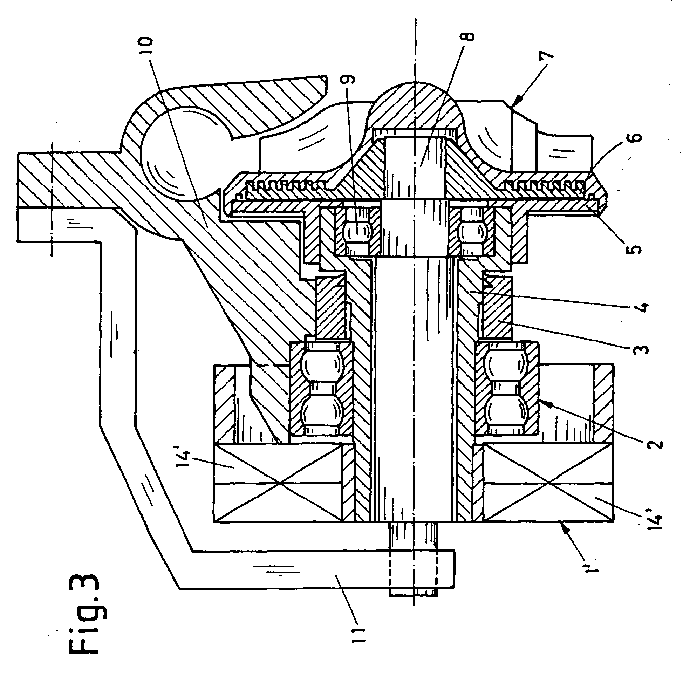

Es versteht sich, daß die Fig. 2 und 3 zwar bevorzugte Ausführungsformen zeigen, daß aber die Scheranordnung im Rahmen der Erfindung auch in derjenigen Art ausgebildet sein könnte, wie sie oben an Hand des Standes der Technik geschildert wurde. Die Erfindung ist somit nicht auf eine bestimmte Scheranordnung beschränkt.

Um nun das Ausmaß der erzeugten Wärme bzw. der sie erzeugenden Relativbewegung zwischen Scherplatte 6 und Innenflächen des Flügelrades 7 steuern oder regeln zu können, sind zwei Möglichkeiten denkbar: Entweder wird der Halteeinrichtung 8 die Möglichkeit zum Mitdrehen eingeräumt und/oder es wird die Drehung der Hohlwelle 4 und damit des Flügelrades 7 einer Steuerung unterworfen. An sich ist natürlich auch eine Kombination beider Möglichkeiten denkbar, beispielsweise indem die beiden Drehteile 4 und 8 über ein Differentialgetriebe miteinander getrieblich verknüpft werden, wobei etwa durch Bremsung des Differentialkäfigs das Ausmaß der Relativdrehung eingestellt wird.

Bei der Ausführungsform nach Fig. 2 wird ein anderer Weg beschritten. Am Gehäuse 17 ist ein Bügel 11 mittels lediglich strich-punktiert angedeuteter Schrauben 25 befestigt. Dieser Bügel 25 hält ein Bremsgehäuse 12, in dem eine Bremsmagnetspule 14 auf eine Bremswicklung oder -feder 13 derart einwirkt, daß sich diese bei elektromagnetischer Betätigung mehr oder weniger um die Statorwelle 8 wickelt und diese bremst. Das Ausmaß der Bremsung kann an sich im Fahrzeug 101 (Fig. 1) durch Knopfbetätigung an einem Steuerkasten 104 eingestellt werden, doch ist in Fig. 2 noch eine andere Möglichkeit gezeigt.

Es ist nämlich denkbar, eine temperaturabhängige Steuerung dadurch zu erzielen, daß mindestens ein Temperatursensor S1, beispielsweise im Kreislauf des Temperierfluids, wie etwa im Kanal 18, vorgesehen wird. Es ist aber - besonders bei Klimatisierungsaniagen - auch denkbar, an verschiedenen Stellen Temperatursensoren S1 (Fig. 2) S2, S3, S4, S5 usw. (siehe Fig. 1) vorzusehen. Natürlich werden die damit gewonnenen Messungen unterschiedlichen Einfluß auf die Steuerung haben müssen. Deshalb ist es vorteilhaft, wenn eine Steuerstufe 26 vorgesehen ist, in welcher die über verschiedene Eingangsleitungen von den Sensoren S1 bis S5 ... sowie allenfalls auch vom Steuerpult 104 eingehenden Signale entsprechend gemischt werden, sei es durch Addition, Subtraktion oder eine andere mathematische Operation.

Da bei einem neuronalen Netzwerk die sogenannte Eingangsschicht ("input layer") 28 sowieso eine Wichtung der Eingangssignale durchführt und dieser mindestens einen Schicht dann eine Summierstufe nachgeschaltet ist (vgl. *Technology, Law and Insurance,* Vol. 5, Nos. 3/4 , Sept./Dez. 2000, S. 199-202, Verlag E & FN Spon) zeigt sich, daß der Einsatz eines neuronalen Netzwerkes für die Zwecke der Steuerung bzw. Regelung besonders vorteilhaft ist. Obwohl die Anwendung eines neuronalen Netzwerkes hier im Zusammenhang mit der Ausbildung der Scheranordnung innerhalb des Förderrotors 7 beschrieben wird, versteht es sich, daß diese Ausbildung mit einer gewichtenden Steuerung auch eine selbständige Erfindung darstellt.

Es mag vorteilhaft sein, das neuronale Netzwerk 26, 28 als adaptives Netzwerk auszubilden. Denn die von der Eingangsschicht 28 durchgeführte Wichtung kann durchaus je nach Wetterlage unterschiedlich vorzunehmen sein. Deshalb ist ein Adaptereingang 29 zur Anpassung der Gewichtungen vorgesehen, der beispielsweise von einem Sensor für die Außentemperatur angesteuert werden kann, gegebenenfalls aber auch der Anpassung derart dient, daß das Verhältnis der Motortemperatur zur Innentemperatur des Fahrzeuges 101 optimiert wird.

Die Ausgangsleitung aus der Steuerstufe 26, 28 führt dann entweder ein Analog- oder ein Digitalsignal und steuert damit eine Schaltstufe 30 für die Magnetwicklung 14. Mit einem Analogsignal ist es möglich, die Bremsung sanft stärker oder schwächer zu machen, wogegen mit einem Digitalsignal (ohne weiter Umwandlung) lediglich eine totale Bremsung oder eine Freigabe erzielt werden kann.

Auch hier ist die Erfindung keineswegs auf eine bestimmte Art der Steuerung eingeschränkt, nachdem ja bereits eingangs auf verschiedene bekannte Steuerungsmöglichkeiten hingewiesen worden ist, die dem Fachmanne zur Verfügung stehen.

In Fig. 3 haben Teile gleicher Funktion dieselben Bezugszeichen wie in Fig. 2, Teileähnlicher Funktion dieselben Bezugszeichen, aber unter Hinzufügung eines Zusatzzeichens. An Hand dieses Ausführungsbeispieles wird die andere, oben bereits angedeutete, Möglichkeit gezeigt, nämlich den Betrieb des Flügelrades 7 zu verlangsamen oder ganz auszuschalten, sobald eine gewünschte Temperatur einmal erreicht ist. Die Einzelheiten der zugehörigen Steuerung sind hier nicht nochmals gezeigt, d.h. diesbezüglich wird auf Fig. 2 verwiesen.

Gemäß Fig. 3 ist das Antriebsrad 1' mit einer integrierten elektromagnetischen Kupplung mit Spulen 14' in der Weise ausgebildet, wie dies von AC-Kompressorkupplungen bekannt ist. Daher brauchen hier die Einzelheiten der Ansteuerung dieser Kupplung nicht im einzelnen beschrieben zu werden. Die Kupplung mit den Wicklungen 14' steuert also die Mitnahme der Hohlwelle 4 durch das Antriebsrad 1', wogegen der Bügel 11 die wellenartige Halteeinrichtung 8 völlig stillsetzt. Allerdings wurde oben bereits erwähnt, daß es durchaus denkbar wäre, die Ausführungen nach den Fig. 2 und 3 miteinander zu kombinieren, etwa um Heizen und Fördern unabhängig voneinander steuern zu können.

Bei einem Vergleich der Ausführungsformen nach den Fig. 2 und 3 zeigt sich, daß im ersteren Falle die Scherplatte 6 durch die Bremseinrichtung stationär gehalten werden kann, in welchem Falle sich gegenüber dem rotierenden Flügelrad 7 die größte Scherung und damit die größte Wärmeentwicklung ergibt. Dagegen wird bei völlig ungebremster Scherplatt 6 (Zwischenstufen sind bei einer Analogsteuerung an sich möglich) nur Fluid über das Flügelrad gefördert, aber - infolge des Mitdrehens der Scherplatte - nicht erhitzt.

Etwas anders sieht die Funktion im Falle der Fig. 3 aus. Wird nämlich durch die Kupplung mit den Wicklungen 14' das Flügelrad 7 gedreht, so ergibt sich automatisch auch eine Scherwirkung gegenüber der Scherplatte 6, so daß dann sowohl geheizt, wie auch gefördert wird. Schaltet man die Kupplung aus, und das Flügelrad 7 bleibt stehen, so erfolgt weder das eine noch das andere. Diese Betrachtung zeigt, daß die beiden Ausführungsbeispiele zweckmäßig in Anpassung an die jeweiligen Erfordernisse gewählt werden können.

Natürlich sind im Rahmen der Erfindung zahlreiche Varianten denkbar. Beispielsweise kann die Relativdrehung zwischen den Teilen 6 und 7 theoretisch auch durch eine Drehung beider Teile in entgegengesetzter Richtung erzielt werden, beispielsweise wenn man das schon erwähnte Differentialgetriebe anwendet. Ferner wurde an Hand der Fig. 2 und 3 jeweils eine elektromagnetische Steuereinrichtung gezeigt, doch kann sowohl Bremsung als auch Kupplung durchaus auch rein mechanisch durchgeführt werden, beispielsweise indem zwei ineinandergreifende Konen (Konusbremse oder Konuskupplung) mehr oder weniger aneinandergepreßt werden.

Denkbar wäre auch die Verwendung von mehr als einer Scherplatte 6, so daß beispielsweise sich die Vorsprünge 19 der einen Platte gegen eine Innenfläche des Flügelrades 7 nach rechts wendet (wie in den Figuren gezeigt), wogegen die andere nach links gekehrt ist. In einem solchen Fall mit mehr als einer Scherplatte müssen diese auch nicht unbedingt gleichartig ausgebildet werden.

Außerdem kann auch ein Konusspalt (wie beim Stande der Technik) eingesetzt werden, nachdem das Flügelrad 7 - wie ersichtlich - sowieso die Form eines Hohlkegels besitzt. In diesem Falle wäre eine Einstellung der Scherung durch axiales Verschieben der Haltewelle 8 denkbar, um den Spalt zwischen der konischen Innenfläche des Flügelrades 7 und einem entsprechenden Scherkonus einzustellen.

Bei beiden Ausführungsbeispielen wurde die Unterbringung der Halteeinrichtung 8 in einer Hohlwelle 4 beschrieben, was natürlich besonders platzsparend ist. Theoretisch könnte jedoch der Förderrotor 7 an seinem Umfang angetrieben werden, so daß sich eine Hohlwelle erübrigt.

Es ist zweckmäßig, wenn die die viskose Flüssigkeit aufnehmende Kammer - in der beschriebenen Weise praktisch lediglich als Spalt 23 ausgebildet ist, weil dann das gesamte Volumen an viskoser Flüssigkeit an der Scherwirkung teilnimmt und nicht ein Teil der Wärme abwandert. Dennoch ist es auch hier, wie im Falle des Standes der Technik, möglich, größere Kammern vorzusehen.

Für die oben beschriebene Steuerung wurde jeweils nur ein Elektromagnet 14 bzw. 14' beschrieben. Gewünschtenfalls könnten natürlich auch beispielsweise zwei gegeneinander wirkende Elektromagneten vorgesehen werden, von denen der eine im einen Sinne, der andere im anderen Sinne wirkt.

Oben wurde an Hand der Fig. 2 zwar die Steuerung über ein neuronales Netzwerk beschrieben, doch ist die Erfindung auch darauf nicht beschränkt. Als Alternative käme etwa eine Fuzzy-Regelung in Frage, weil auch dort - in gewissem Sinne - eine Wertung bzw. Gewichtung der Eingangssignale vorgenommen wird, diese also ebenfalls eine gewichtende Steuerung darstellt.

In der obigen Beschreibung der Ausführungsbeispiele wurde jeweils von einem Kreislauf des Temperierfluids ausgegangen. Natürlich ist die Erfindung keineswegs auf einen Kreislauf eingeschränkt, weil ja auch verbrauchbare Fluide für die Temperierung eingesetzt werden können, beispielsweise Luft. Dennoch wird man, wie üblich, für gewöhnlich das Temperierfluid im Kreislauf führen.

In jedem Falle ergeben sich aber durch die Erfindung die folgenden besonderen Vorteile:
- Der Wärmeübergang von der Scheranordnung zum Temperierfluid erfolgt mit höherem Wirkungsgrad,
- die Anordnung ist besonders kompakt und nimmt somit weniger Platz als herkömmlich ein,
- die Konstruktion ist besonders einfach, weil der Wärmeübergang von der Scheranordnung auf das Temperiermedium ohne besondere Steuerung erfolgt,
- auch für die viskose Flüssigkeit ist kein Kreislauf erforderlich, d.h. es erübrigen sich auch zugehörige Armaturen.

## Patentansprüche

1. Heizvorrichtung (103) für ein mittels eines an einer durch einen Antrieb rotierenden Welle (4) sitzenden Förderrotors (7) gefördertes Temperierfluid, welche Heizvorrichtung (103) Wärme durch Scherung mittels einer rotierenden Scheranordnung (6, 7, 19-22) in einer eine viskose Flüssigkeit aufnehmenden Kammer (23) zur Abgabe an das Temperierfluid erzeugt, **dadurch gekennzeichnet, daß** die Kammer (23) unmittelbar in einem Hohlraum des Förderrotors (7) ausgebildet ist.

2. Heizvorrichtung nach Anspruch 1, **dadurch gekennzeichnet, daß** die Welle (4) hohl ist und in ihrem Inneren eine, vorzugsweise wellenartige, Halteeinrichtung (8) für mindestens eine Scherplatte (6) aufweist, welche in der Kammer (23) angeordnet ist und mit Innenflächen des Förderrotors (4) durch eine Relativbewegung zwischen ihnen zusammenwirkt.

3. Heizvorrichtung nach Anspruch 2, **dadurch gekennzeichnet, daß** eine, vorzugsweise elektrische, Steuereinrichtung (13, 14, 14', 26, 28) für die Relativbewegung zwischen Scherplatte (6) und Innenflächen des Förderrotors (7) vorgesehen ist, durch welche die Größe der relativen Bewegung steuerbar ist, beispielsweise mit einer die Eingangssignale von mindestens zwei Sensoren gewichtenden, insbesondere neuronalen, Steuerung.

4. Heizvorrichtung nach Anspruch 3, **dadurch gekennzeichnet, daß** die Steuereinrichtung (13, 14, 14', 26, 28) mindestens einen Elektromagneten (14, 14') aufweist, dem Steuersignale aus einer Steuerstufe (26, 28), vorzugsweise mit mindestens einem Temperatursensor (S1-S5), zuführbar sind.

5. Heizvorrichtung nach Anspruch 3 oder 4, **dadurch gekennzeichnet, daß** die Steuereinrichtung (13, 14, 14', 26, 28) eine Bremseinrichtung (13, 14) für die Scherplatte (6) aufweist.

6. Heizvorrichtung nach Anspruch 3, 4 oder 5, **dadurch gekennzeichnet, daß** die Steuereinrichtung (13, 14, 14', 26, 28) eine Kupplung (14') für die Welle (4) des Förderrotors (7) aufweist.

7. Heizvorrichtung nach einem der vorhergehenden Ansprüche, **dadurch gekennzeichnet, daß** die Kammer (23) als im Betrieb völlig geschlossene Kammer ausgeführt ist.

8. Heizvorrichtung nach einem der vorhergehenden Ansprüche, **dadurch gekennzeichnet, daß** die Scheranordnung ineinandergreifende Vorsprünge und Vertiefungen (19-22) mindestens zweier einander gegenüberliegender und zu einer Relativbewegung angetriebener Teile (6, 7) aufweist.

9. Heizvorrichtung nach einem der vorhergehenden Ansprüche, **dadurch gekennzeichnet, daß** das Temperierfluid durch Leitungen (106, 107) innerhalb eines Fahrzeuges (101) strömt, insbesondere zirkuliert, beispielsweise in einem Kühl- und/oder Klimatisierkreislauf, und daß der Antrieb vom Fahrzeugantrieb (102) abgeleitet ist.

10. Heizvorrichtung nach einem der vorhergehenden Ansprüche, **dadurch gekennzeichnet, daß** die Kammer (23) als Spalt ausgebildet ist.

## Claims

1. Heating device (103) for a thermostatting fluid transported by means of a transport rotor (7) mounted on a shaft (4) rotating by means of a drive, which heating device (103) can raise heat by shearing by means of a rotating shearing arrangement (6, 7, 19-22) in a chamber (23) receiving a viscous liquid, for release to the thermostatting fluid, **characterized in that** the chamber (23) is formed directly in a cavity of the transport rotor(7).

2. Heating device according to Claim 1, **characterized in that** the shaft (4) is hollow and has, in its interior, a preferably shaft-like retaining device (8) for at least one shear plate (6) which is arranged in the chamber (23) and cooperates with inner surfaces of the transport rotor (4) by relative movement between them.

3. Heating device according to Claim 2, **characterized in that** a preferably electrical control device (13, 14, 14', 26, 28) is provided for the relative movement between shear plate (6) and inner surfaces of the transport rotor (7), by means of which control device the magnitude of the relative movement can be controlled, for example by means of a control, in particular neuronal control which weights the input signals of at least two sensors.

4. Heating device according to Claim 3, **characterized in that** the control device (13, 14, 14', 26, 28) has at least one electromagnet (14, 14') to which control signals from a control stage (26, 28), preferably having at least one temperature sensor (S1-S5), can be fed.

5. Heating device according to Claim 3 or 4, **characterized in that** the control device (13, 14, 14', 26, 28) has a braking device (13, 14) for the shear plate (6).

6. Heating device according to Claim 3, 4 or 5, **characterized in that** the control device (13, 14, 14', 26, 28) has a clutch (14') for the shaft (4) of the transport rotor (7).

7. Heating device according to any of the preceding Claims, **characterized in that** the chamber (23) is in the form of a completely closed chamber during operation.

8. Heating device according to any of the preceding Claims, **characterized in that** the shearing arrangement has intermeshing projections and indentations (19-22) of at least two parts (6, 7) located opposite to one another and driven so as to execute a relative movement.

9. Heating device according to any of the preceding Claims, **characterized in that** the thermostatting fluid flows, in particular circulates, through pipes (106, 107) inside a vehicle (101), for example in a cooling and/or air conditioning circulation, and **in that** the drive is derived from the vehicle drive (102).

10. Heating device according to any of the preceding Claims, **characterized in that** the chamber (23) is in the form of a gap.

## Revendications

1. Dispositif de chauffage (103) pour un fluide de régulation de température, pompé au moyen d'un rotor de transfert (7), monté sur un arbre (4) mis en rotation au moyen d'un entraînement, le dispositif de chauffage 103 produisant de la chaleur par glissement-cisaillement au moyen d'un dispositif à glissement-cisaillement (6, 7, 19 à 22) rotatif dans une chambre (23) recevant un liquide visqueux, pour délivrance au fluide de régulation de température, **caractérisé en ce que** la chambre (23) est réalisée directement dans un espace creux du rotor de transfert (7).

2. Dispositif de chauffage selon la revendication 1, **caractérisé en ce que** l'arbre (4) est creux et présente intérieurement un dispositif de maintien (8), de préférence du genre d'un arbre, pour au moins une plaque de cisaillement (6), disposée dans la chambre (23) et coopére avec des faces intérieures du rotor de transfert (4), par un déplacement relatif entre elles.

3. Dispositif de chauffage selon la revendication 2, **caractérisé en ce qu'**un dispositif de commande (13, 14, 14', 26, 28), de préférence électrique, est prévu pour le mouvement relatif entre la plaque de cisaillement (6) et les faces intérieures du rotor de transfert (7), au moyen duquel l'ampleur du mouvement relatif peut être commandé, par exemple avec une commande, en particulier neuronale, pondérant les signaux d'entrée provenant d'au moins deux capteurs.

4. Dispositif de chauffage selon la revendication 3, **caractérisé en ce que** le dispositif de commande (13, 14, 14', 26, 28) présente au moins un électro-aimant (14, 14'), auquel peuvent être amenés des signaux de commande venant d'un étage de commande (26, 28), de préférence avec un capteur de température (S1 à S5).

5. Dispositif de chauffage selon la revendication 3 ou 4, **caractérisé en ce que** le dispositif de commande (13, 14, 14', 26, 28) présente un dispositif de freinage (13, 14) pour la plaque de cisaillement (6).

6. Dispositif de chauffage selon la revendication 3, 4 ou 5, **caractérisé en ce que** le dispositif de commande (13, 14, 14', 26, 28) présente un embrayage (14') pour l'arbre (4) du rotor de transfert (7).

7. Dispositif de chauffage selon l'une des revendications précédentes, **caractérisé en ce que** la chambre (23) est réalisée sous la forme de chambre entièrement fermée pendant le fonctionnement.

8. Dispositif de chauffage selon l'une des revendications précédentes, **caractérisé en ce que** le dispositif de cisaillement présente des saillies et des cavités (19 à 22), s'engageant les unes dans les autres, au moins de deux parties (6, 7), placées en regard l'une de l'autre et entraînées en un mouvement relatif.

9. Dispositif de chauffage selon l'une des revendications précédentes, **caractérisé en ce que** le fluide de régulation de température s'écoule à travers des conduites (106, 107) à l'intérieur d'un véhicule (101), en particulier est mis en circulation, par exemple dans un circuit de refroidissement et/ou de climatisation, et **en ce que** l'entraînement est dérivé de l'entraînement de véhicule (102).

10. Dispositif de chauffage selon l'une des revendications précédentes, **caractérisé en ce que** la chambre (23) est réalisée sous la forme d'intervalle.
